# EUROPEAN PATENT APPLICATION

(11) **EP 1 486 746 A1**
(43) Date of publication of application: **15.12.2004**
(21) Application number: 04013709.3
(22) Date of filing: 11.06.2004
(51) Int. Cl.: F25D 31/00

(54) **Method and apparatus for emptying a plate freezer with vertical freezing plates**

(30) Priority: 12.06.2003 DK 200300881; 01.10.2003 DK 200301430
(71) Applicant: A/S Dybvad Stalindustri, 9352 Dybvad (DK)
(72) Inventor: Sören Mikkelsen, 9900 Frederikshavn (DK)
(74) Representative: Olsen, Peter Vestergaard

(57) **Abstract**

By a method for emptying a vertical plate freezer (2), there is used an apparatus that can perform automatic emptying of the plate freezer. The apparatus runs on rails (5) along one side of the plate freezer and is constructed with a frame (6). On the frame (6) is suspended a cylinder (8) provided with a gripping member (11) and a conveyor belt (7) that may convey frozen blocks (1) transversely of the plate freezer (1).

By means of the gripping member (11), each block (1) can be tilted over upon the conveyor belt (7), possibly assisted by drive rollers (12). Then the blocks can be conveyed via a guide down onto a conveyor (15).

By the method according to the invention is achieved easy emptying of existing plate freezers with limited space along the other side of the plate freezer, where the frozen blocks (1) are not desired to be brought completely in level with the upper side of the freezer, and there is also achieved improved releasing of the blocks (1) from their supporting surfaces in the freezer (2).

## Description

### Background of the Invention

In connection with handling frozen blocks while emptying a plate freezer with vertical freezing chambers, there are different methods and apparatuses with the purpose of automating emptying such plate freezers, in particular for improving the working environment. Frozen blocks from vertical plate freezers typically weigh 40 kg, and if they are frozen as two halves with a separating plate, the blocks or block parts weigh 20 kg each. The work with removing the blocks from the top side of the plate freezer and stack them has always been a demanding and straining manual work, even if the blocks are sometimes divided into three or four parts with separating plates, and which is worsened by being done at freezing temperatures.

The invention concerns a method for emptying a plate freezer with vertical freezing plates, between which plates frozen blocks can be formed and then displaced upwards into a standing position so that the blocks are projecting up above the upper side of the plate freezer, where the frozen blocks are conveyed to one side of the plate freezer by an apparatus extending across the top side of the plate freezer and which may be displaced along of the plate freezer.

Furthermore, the invention concerns an apparatus for performing the method and adapted for emptying a plate freezer with vertical freezing plates, between which vertically standing frozen blocks can be formed, the plate freezer being of the kind arranged for releasing the blocks by elevating either one block, a row of blocks or all blocks in the plate freezer so that the blocks project up over the upper side of the plate freezer, where the apparatus may be suspended at the frame of the plate freezer so as to be displaced in the longitudinal direction of the plate freezer, where the apparatus is adapted to extend across the upper side of the plate freezer, and where the apparatus can convey elevated blocks individually or in rows to one side of the plate freezer.

Such a method and such an apparatus are disclosed in WO 03/02172, where the main object is to transfer the blocks from the plate freezer to a conveyor belt running along the side of the plate freezer, alternatively to a stacking station for the blocks. This prior art uses a pushing device consisting of a conveyor belt with a vertically oriented carrying face with drivers that push the frozen blocks, which are in their vertical position, to one side of the apparatus. This prior art apparatus is mounted on a displacing arm that may be displaced along the longitudinal axis of the plate freezer, where the displacing arm is suspended by a beam that runs along the side of the plate freezer opposite the side to which the blocks are to be conveyed. Thereby manual handling of the heavy frozen blocks is avoided. The plate freezer described in WO 03/02172 is of a construction where the mechanism pushing the frozen blocks upwards from the position between the freezing plates is provided at the bottom of the freezer, and the prior art apparatus is therefore mounted so that it is running on rails mounted at opposing long sides of the plate freezer.

Many existing plate freezers are provided with a different mechanism for emptying the chambers provided between the freezer plates. These plate freezers are provided with lifting forks extending along the bottom of the chambers and up at one side of the plate freezer. In order to have room for the drive mechanism, it is necessary that the lifting forks project up above one side edge of the plate freezer, and therefore it is not possible to suspend and support an emptying apparatus at both long sides of the plate freezer. An example of such a plate freezer is known from EP-A2-1 014 018. By the known plate freezers of the type mentioned there is the circumstance that the frozen blocks are not completely pushed up to the top of the plate freezer, but are standing in a shallow recess since the lifting forks are not lifted completely up to the top side of the freezing chambers, because in a marine installation it is to be avoided that the blocks are sliding sideways due to heavy sea, which means that it is not possible to push the frozen blocks sideways over the edge of the plate freezer as proposed in WO 03/02172. Furthermore, it may be a problem by the known method and the known apparatus that even if the frozen blocks are disposed completely at level with the upper side of the plate freezer, it may be a difficult to push the blocks sideways if their supporting surface is not entirely thawed yet so that the blocks are sticking to the supporting surface.

### Explanation of the Invention

The invention has the purpose of providing a method and an apparatus of the kind indicated in the introduction, where frozen blocks can be removed from the top of plate freezers of existing constructions in an entirely or partly automatic way, so that the physical strain on persons is reduced or eliminated. This means, inter alia, without manual lifting or without manual dividing of the frozen blocks in cases where the frozen block cannot readily be pushed or slid to the side beyond the edge of the plate freezer, and furthermore in cases where it is desirable to avoid problems with adhering of the blocks to the supporting surface in the plate freezer.

This is achieved by a method being peculiar in that at least one frozen block is tilted in direction in parallel with the direction of displacement of the apparatus, from a standing to a lying and substantially horizontal position, where the frozen block eventually rests upon a substantially horizontally configured transport device on the apparatus, and that the transport device conveys the frozen block to one side of the plate freezer. Tilting of the blocks does not entail lifting of blocks and may be performed manually without any measurable strain on the operator, and the transport device conveys the lying blocks until they pass over the side of the plate freezer. The transport device may e.g. consist of a roller track or a conveyor belt.

The peculiar feature of the apparatus according to the invention is that the apparatus is provided with a mainly horizontal transport device carried by the apparatus and adapted for conveying frozen blocks that are tilted and lying on the side on the transport device towards the side of the plate freezer. The transport device can be a roller track or a belt running transversely of the direction of displacement of the apparatus.

By the invention is thus applied the principle that each frozen block is released from it supporting surface independently whether there is an edge preventing sliding or whether the blocks still adhere to the supporting surface in the freezing chambers, since they are tilted over upon a transport device which then conveys the frozen block beyond, or at least to, the side edge of the plate freezer. By the apparatus according to the invention, it is the friction between frozen block and transport device that can move the block away, in contrast to the prior art where a driver is needed; these drivers of the prior art are thus to pass by and to engage behind the blocks before the latter can be pushed sideways, and the drivers also take up space. Furthermore, one avoids problems caused by the frozen blocks adhering to the supporting surfaces on which they stand in the freezing chambers, as the blocks are more easily released from the supporting surface by tilting than if they were to be pushed sideways. The apparatus according to the invention is suited for retro-fitting on existing plate freezers where the sideways movement of the frozen blocks is limited due the space consuming block lifting system incorporated in one side of the plate freezer. Besides, manual lifting and carrying of heavy frozen blocks can be avoided, something which has become a requirement to the working environment in many places.

In an embodiment of the inventive method it is preferred that the frozen block is tilted and overturned by a mechanical arm on the apparatus by acting on the upper edge of the frozen block, and wherein the frozen block is subsequently drawn over onto the transport device by the mechanical arm gripping the distal edge of the frozen block in relation to the transport device. The mechanical arm may thus be utilised for more exact positioning of the frozen block on the transport device.

By the method according to the invention it is preferred that tilting of the frozen block occurs across at least one drive roller which is oriented in parallel with the side of the transport device, and wherein the at least one drive roller after tilting the block and before drawing the block over onto the transport device rotates and thereby moves the frozen block at least some distance in direction towards the transport device. Thereby, the transport device may be disposed spaced apart from the block to be tilted, and the drive rollers then provide for limited movement of the block towards the transport device, possibly before the frozen block is drawn entirely to its final position by the mechanical arm. A similar effect is achieved by an alternative embodiment of the method, wherein tilting of the frozen block occurs across at least one tipping plate disposed at the side of the transport device, and wherein the tipping plate after tilting the frozen block is pivoted about an axis oriented in parallel with the transport device, whereby the frozen block is moved a distance in direction towards the transport device.

In a further embodiment of the method according to the invention, each frozen block during conveying in the lying position on the transport device is subjected to a dividing or separating operation, as the position of the frozen block is detected and then a separating tool is moved down onto the upwards facing side of the frozen block until separation has been effected. Thereby it is possible to reduce the size of whole blocks in an automatic way so that manual handling of the blocks is avoided in that connection, and possibly to automate removal of separating plates that adhering to already divided blocks.

In cases where each frozen block at the freezing has been divided into at least two parts by means of a separating plate frozen between the parts or at an end face of one part, it is preferred that the frozen block during transport in the lying position is stopped in its movement when the block reaches a given position detected by a sensor which is capable of detecting the separating plate, after which the separating operation is performed by the separating tool moving downwards and pressing against or striking an upwards facing side edge of the separating plate until the separating plate is released from the frozen block. The separating tool may loosen the separating plate with a rather limited movement from one or both, alternatively all, parts of a frozen block, after which the separating plate falls down under the transport device for collection and reuse.

Alternatively, each frozen block can be provided with at least one dividing notch across one side face or both side faces. A such may readily be provided in existing plate freezers by welding a profiled fillet, preferably with triangular cross-section, vertically extending at the inner side of the plates or walls in each freezing chamber in the plate freezer. This measure is simple to establish since by appropriate dimensioning it is not necessary to make a corresponding cutout in the supporting parts of the lifting forks provided in each of the freezing chambers and which are intended for lifting the frozen blocks up to and above the upper side of the plate freezer. When the frozen blocks have been tilted to lie on one side face, they will thus present a notch which, by appropriately disposing the frozen block, extends transversely to the conveying direction of the block in its horizontal position. The blocks may alternatively have two, three or more notches. In connection with frozen block with notches, the method is performed so that that the frozen block during conveying in the lying position is stopped in its movement when the block reaches a given position detected by a sensor which is capable of detecting the position of the notch directly or indirectly, after which the separating operation is performed by the separating tool being moved down into the block at or opposite the notch on the block until the frozen block is divided into smaller parts. In case of several parallel notches in each block, the separating operation with the separating tool is repeated.

In one embodiment of the apparatus according to the invention, the apparatus has at least one mechanical arm which can be moved in the direction of the displacement of the apparatus and which is provided with a gripping member at one end of the arm, where the arm is arranged to perform one or more pulling movements with the gripping member towards the transport device in dependence of an automatic control. The advantage is, besides fully automatic handling of the blocks, that the tilting arm is utilised for an additional operation. The gripping member may e.g. be made as a plate with a turned down side edge.

In a further embodiment of the apparatus, at least one drive roller is disposed at and oriented with its axis of rotation in parallel with a side edge of the transport device facing in the direction of displacement of the apparatus during operation, and wherein the drive roller may rotate so that the upper side of the drive roller produces a movement against the transport device. Thereby, the transport device can be disposed at slightly higher level than the exit level of the frozen blocks, thus providing spacing between the transport device and the blocks. There may be two drive rollers disposed in parallel in an approximately horizontal plane and/or rollers disposed in axial extension of the first roller.

As alternative to drive rollers, the apparatus according to the invention can be made so that along one side of the transport device there is provided an elongated plate which can be pivoted about an axis parallel with the side of the transport device by a cylinder.

The apparatus can be designed with the mechanical arm as a cylinder with a first extendible end carrying the gripping element and with a second end of the cylinder suspended so as to be pivoted up and down, where the up and down going pivoting movement can be controlled by a second cylinder suspended in a frame above the apparatus. By "cylinder" is meant, besides pneumatic and hydraulic cylinders, electric powered actuators that may perform similar displacing actions. The gripping element may e.g. consist of a disc or a plate element for performing a pulling movement at the edges of the frozen block. In that way is provided a simple construction of the apparatus.

The apparatus according to the invention may be combined with different collecting or transporting devices along the side of the plate freezer. Thy lying frozen blocks may thus just be moved to stacking in this position on a pallet which is moved and elevated and lowered by a separate means. In some cases, further transport of the frozen block in vertical position is desired. In that case it is preferred to design the apparatus so that the transport device has an extended end which is curving downwards at the side to which the blocks are conveyed, where at least one guide is provided above the downwards curving end, where the curved end and the guide are arranged to transfer a frozen block from horizontal position into vertical position, and where at the end of the transport device there is provided shock-absorbing rollers that may receive a frozen block in its vertical position and guide the block onwards to a receiving means. In this embodiment, the receiving means may consist of a conveyor that run along the side of the plate freezer and further on to a store or a collecting station.

For reducing whole frozen blocks into smaller block parts, the apparatus according to the invention may include a sensor for detecting a position of a frozen block on the transport device, a separating tool which is suspended movable substantially in vertical direction above the transport device, and a control which upon detecting the correct position of the frozen block can activate the separating tool that is arranged to be moved down on the frozen block for performing a separating operation on the frozen block.

In a further embodiment for use with frozen blocks that are divided by separating plates, the apparatus according to the invention is peculiar in that the sensor is arranged for detecting a separating plate which is frozen between parts of the frozen block or at an end face of a part of the block, and that the separating tool consists of a means arranged for pressing or striking an upwards facing side edge of the separating plate for releasing it from the frozen block.

By dividing frozen blocks with notches, it is preferred that the separating tool consists of a knife arranged to be moved down into the upper side of the frozen block at or opposite to a notch in the frozen block in dependence of a control for dividing the frozen block.

### The Drawing

Embodiments of the invention are now to be described with reference to the drawing,
where:
- Fig. 1: shows a plate freezer with vertical freezing chambers, seen from the side and provided with a first embodiment of an apparatus according to the invention;
- Fig. 2: shows the same as Fig. 1, but from the left on the line II-II on Fig. 1;
- Fig. 3: shows the same as Fig. 1, but seen from above;
- Figs. 4 and 4a: show a perspective view of a second embodiment of the apparatus according to the invention and a enlarged detail thereof, respectively;
- Fig. 5: shows the apparatus of Fig. 4 only mounted on a section of the transport device;
- Fig. 6: shows the same as Fig. 5, but seen from the end of the plate freezer;
- Figs. 7 and 8: show enlarged details of encircled details on Fig. 6;
- Figs. 9 and 9a: show central parts of the apparatus according to the second embodiment together with a frozen block, as exploded view and as enlarged detail thereof, respectively;
- Figs. 10 and 11: show stop members and a separating plate from above and in perspective view, respectively;
- Figs. 12a - 12c: show right and left stop member in perspective view and separating plate as separate parts, respectively;
- Figs. 13a and 13b: show two different embodiments of a separating tool; and
- Figs. 14 and 14a: show a third embodiment of the apparatus according to the invention for use in connection with dividing frozen blocks with notch and enlarged detail thereof, respectively.

### Description of Embodiment Examples

On the drawing is shown a plate freezer of a type manufactured by A/S Dybvad Stålindustri, Denmark, and of which some details are disclosed in EP-A2-1 01 018. This type of plate freezer has vertical freezing chambers between which can be frozen food products. These plate freezers are often used aboard fishing vessels, where the catch is frozen immediately after the making the catch.

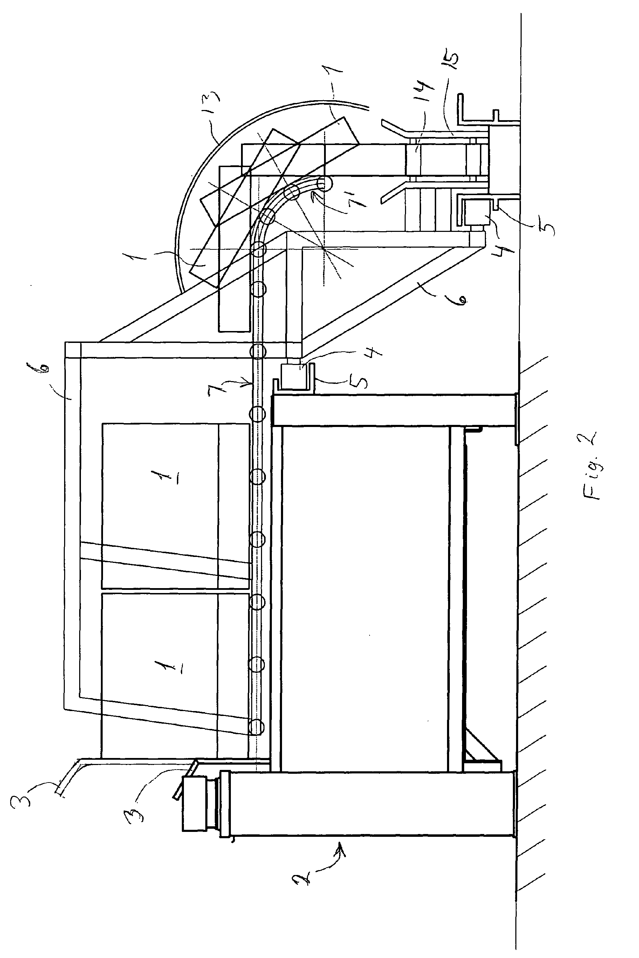

The products are frozen into blocks in the plate freezer, as one or more blocks 1 are formed in each of the rows juxtaposed in longitudinal direction of the plate freezer 2. At the bottom and at one side of each chamber, a lifting fork 3 is arranged, extending up along one side of the plate freezer. On Fig. 2 is seen a lifting fork 3 both in lowered and in elevated position.

The emptying apparatus according to the invention is suspended displacing along the longitudinal axis of the plate freezer by rollers 4 running in a pair of rails 5, where in the shown embodiment there is provided a rail 5 fastened at the side of the plate freezer, and the other rail 5 resting and fastened on the base. In an alternative embodiment, both rails can be fastened at the side of the plate freezer 2 so that the construction it independent of the base. In the latter case, the apparatus will be carried by the freezer 2 only. The apparatus is made with a frame 6 which is supported by the rollers 4 and which extends as a cantilever structure across the upper side of the plate freezer 2.

Close to the upper side of the plate freezer 2, a horizontally extending transport device is suspended, embodied as a conveyor belt 7 extending transversely of the longitudinal axis of the freezer as well as the displacement direction of the apparatus; in an alternative embodiment, a roller track with driven rollers can be used instead of the belt 7. The conveyor belt 7 can convey blocks 1 sideways and beyond the edge of the freezer 2. The conveyor belt 7 is controlled a not shown automatic control unit so that it can start and stop depending on a specified or programmed sequence.

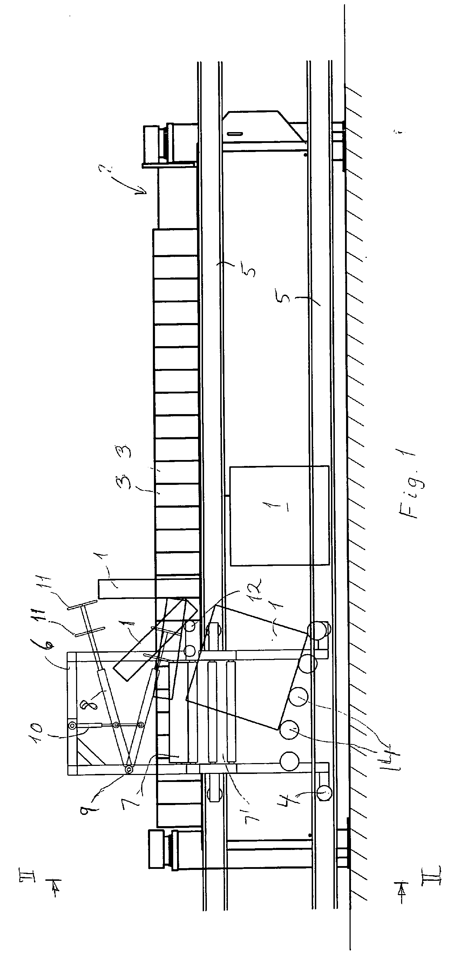

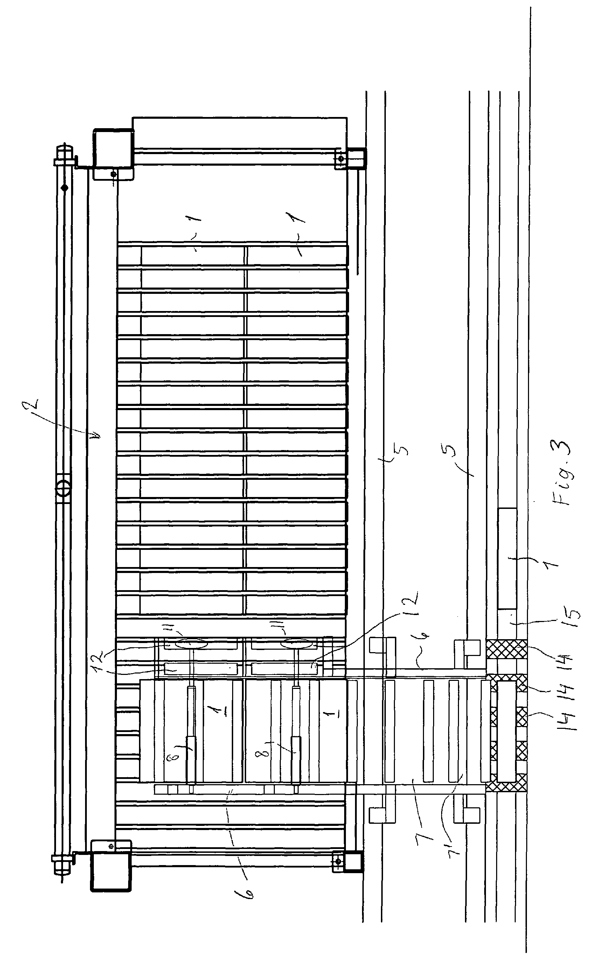

Spaced above the conveyor belt 7, on the frame 6, a preferably hydraulic powered cylinder 8 is suspended. The cylinder 8 is suspended with its first end at the point 9 and is suspended by means another smaller cylinder 10 in the frame 6 as shown on Fig. 1. As shown on Fig. 3, two independent parallel cylinders may be disposed side by side for handling two blocks 1 standing side by side. At the end of its piston rod, the cylinder 8 is provided with a gripping element 11 which can be a shaped plate element or a disc. The two different positions on Fig. 1 of the element 11 only show different positions. The cylinder 8 may simultaneously be pivoted up and down by the cylinder 10, see Fig. 1.

At one side of the conveyor belt 7, two drive rollers 12 are journalled on the frame 6. The rollers 12 extend in parallel with one side edge of the conveyor belt 7. As shown on Fig. 3, two drive rollers 12 are preferred below each handling cylinder 8. The drive rollers 12 may either rotate continuously in direction towards the conveyor belt 7, or they may run in dependence of a not shown automatic control.

As seen on Fig. 3, the conveyor belt 7 can be provided with a downwards curving end 7'. Other embodiments are of course possible, so that the conveyor belt just ends straight out in the air by a platform where the blocks can be delivered on a pallet, or where the blocks 1 can be removed by means of a lifting mechanism. In the shown embodiment a guide 13 in the form of an arched steel plate is provided above the downwards curving end 7'. The guide 13 is finished immediately above a number of shock-absorbing rollers 14 that, as shown on Fig. 1, may guide a block 1 down onto a receiving means in the shape of a conveyor 15 known per se.

The function of the apparatus and the performing of the method according to the invention are as follows:

The apparatus as shown on Figs. 1 and 3 is displaced during the emptying from the left to the right. Normally, the frozen blocks 1 are lifted all at once, as the lifting forks 3 are controlled by a common mechanism. If the frozen blocks 1 are lifted individually by means of the lifting forks 3, there is, however, possibility of moving the apparatus in the opposite direction. The frozen blocks 1 are released from the freezing chambers in the plate freezer 2 by thawing the inner sides of the freezing chambers. Then a block or a pair of blocks are elevated, as shown in the example, to a position where they are projecting above the upper side of the plate freezer 2, se particularly Fig. 1.

Depending on a not shown automatic control, the cylinder 8 is extended simultaneously with the cylinder 10 being retracted. The gripping element 11 may thereby reach in over the edge of a block 1 and in behind the upper side edge of the block 1 being farthest from the apparatus. Then the cylinder 8 retracts, tilting the block 1 until the block 1 overturns by gravity, see Fig. 1. The block thereby falls down upon the rollers 12. These rollers 12 then moves the lying block 1 a distance in direction of the conveyor belt 7. In the shown embodiment, the drive rollers 12 cannot move the block 1 entirely over onto the belt, why the cylinder 8 is lowered by means of the cylinder 10 and gets hold of the rearmost and farthest side edge of the block 1. Then the block 1 is pulled by collapsing the cylinder 8 upon the belt 7 so that the block 1 comes to rest within the frame 6 of the apparatus, see Fig. 3.

Then the belt 7 is started, and one block, or two blocks as shown on Fig. 3, are conveyed sideways across the top of the freezer transversely to the longitudinal axis of the freezer. When each block 1 reaches the downwards curving end 7', it will tip up with the trailing end until the rear edge of the block 1 hits the guide 13, so that an uncontrolled pivoting of the block is prevented. Then the block 1 hits the shock-absorbing rollers 13 and is passed down onto the conveyor 15 that moves it to a collecting station (not shown).

In the following, further embodiments of the apparatus and the method according to the invention utilises the emptying device as described above for performing a division of the frozen blocks so that they may be further transported in smaller pieces.

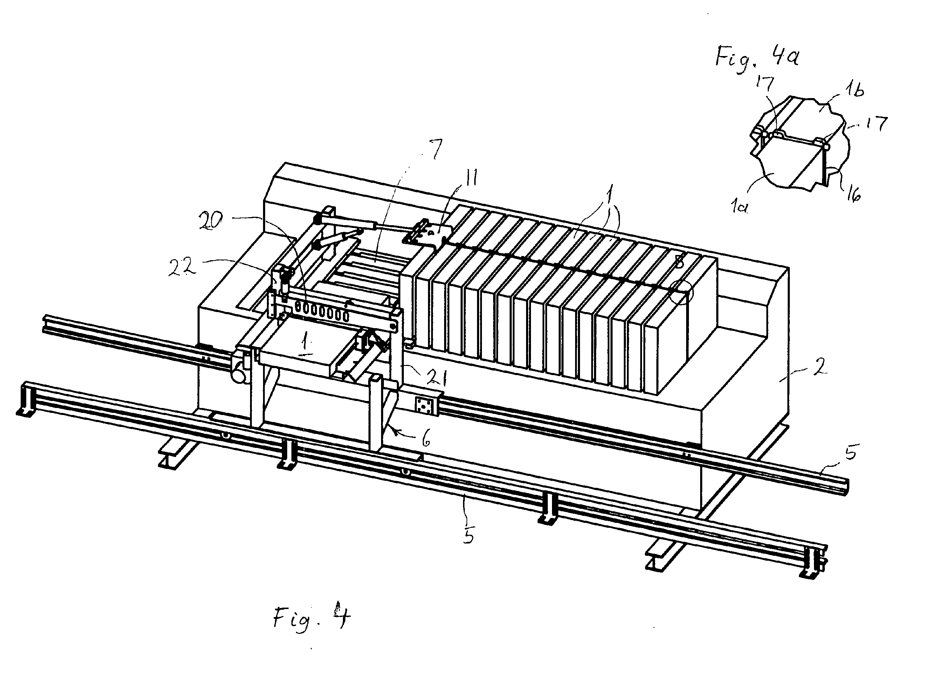

On Fig. 4 is seen a plate freezer 2, where frozen blocks 1 are lifted up above the upper side of the plate freezer by means of not shown lifting forks. The blocks 1 are overturned by the gripper 11 upon a transverse transport device that presently is constituted by a roller track 7. Frozen blocks 1 may thereby be moved to the side in relation to the plate freezer 2 for further transport or for stacking on pallets.

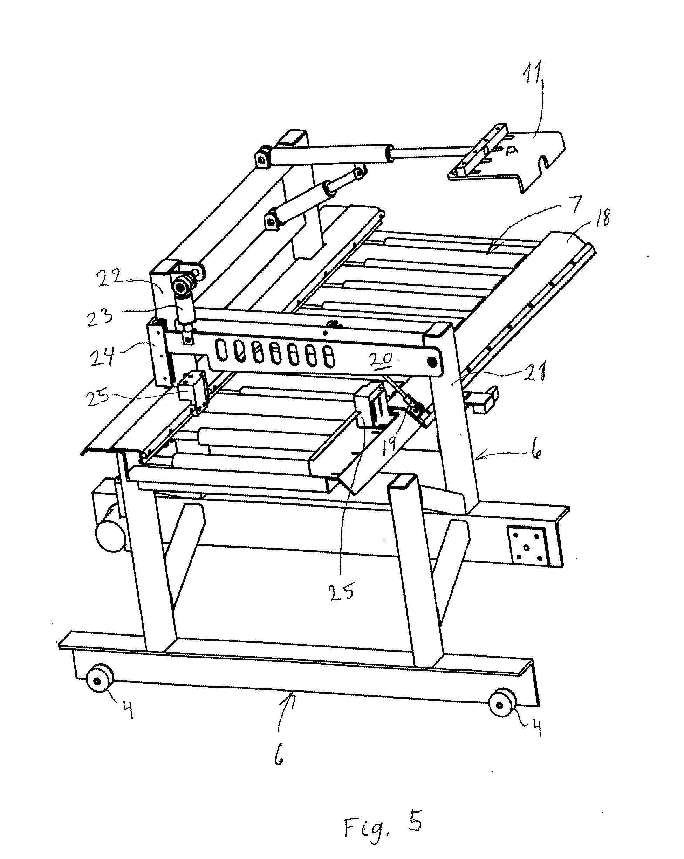

At the side of and along the plate freezer 2, in the same way as previously described, two rails 5 are mounted, by which a frame 6 carrying the roller track 7 and the gripper 11 is displacing suspended. As the blocks 1 are tilted and falls over upon the roller track 7, the frame 6 moves onwards through the rows of blocks 1. The frame 6 also carries a separating tool 20 which is suspended on two columns 21, 22. More details of this embodiment of the apparatus according to the invention are now described with reference to Figs. 5 - 13b. In this embodiment, the apparatus is adapted to remove separating plates 16 that divide each block into two half parts.

The separating tool 20 is here designed as an elongate plate member that is pivotably suspended, with one end on the column 21 and the other end in a hydraulic cylinder 23 connected to the column 22. The other end of the separating tool 20 is furthermore received in a guideway 24, securing the separating tool 20 against lateral movements during operation. By means of the cylinder 23, the separating tool 20 can perform pivoting movements up and down, i.e. towards and away from the roller track 7.

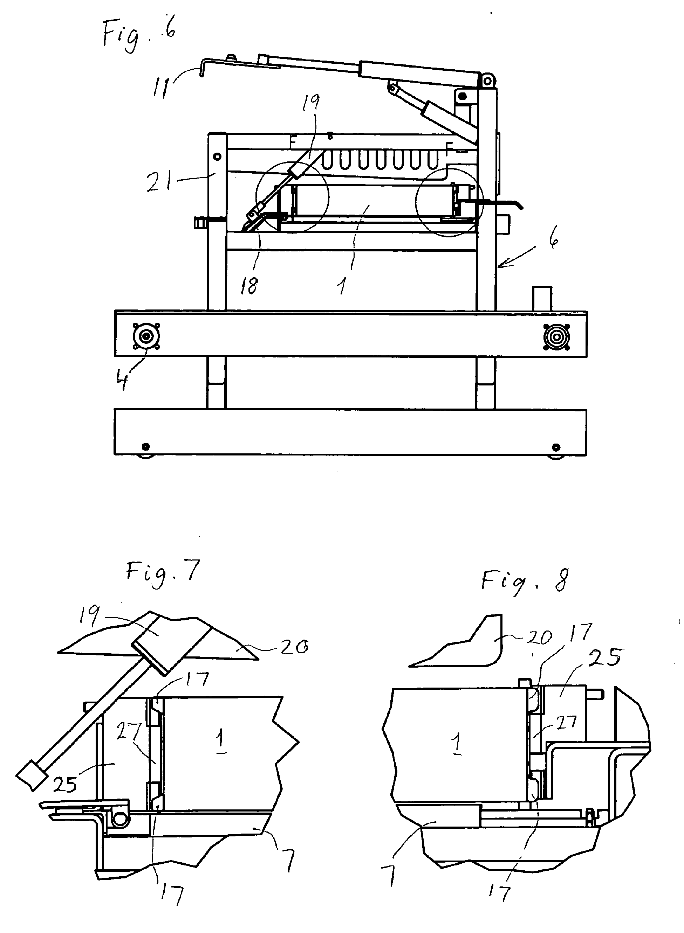

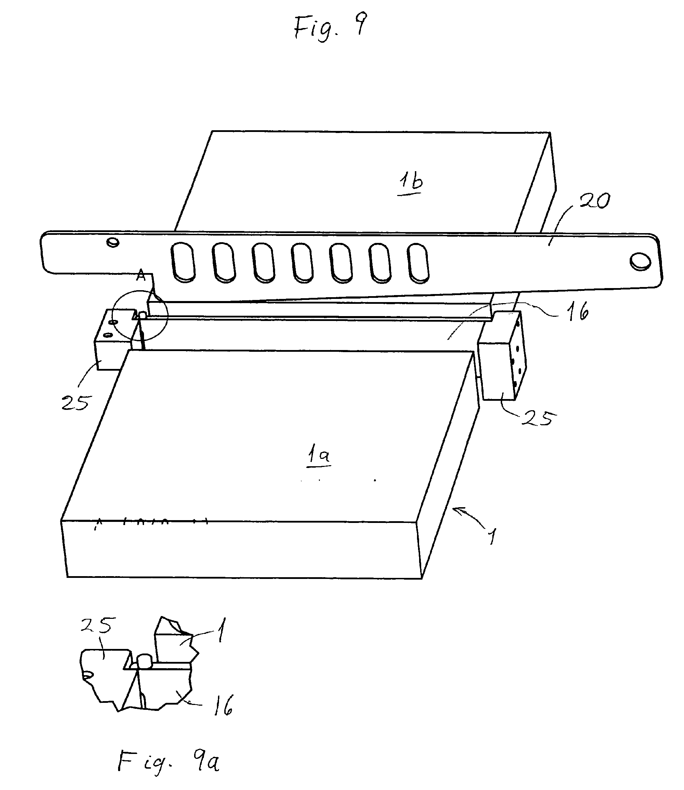

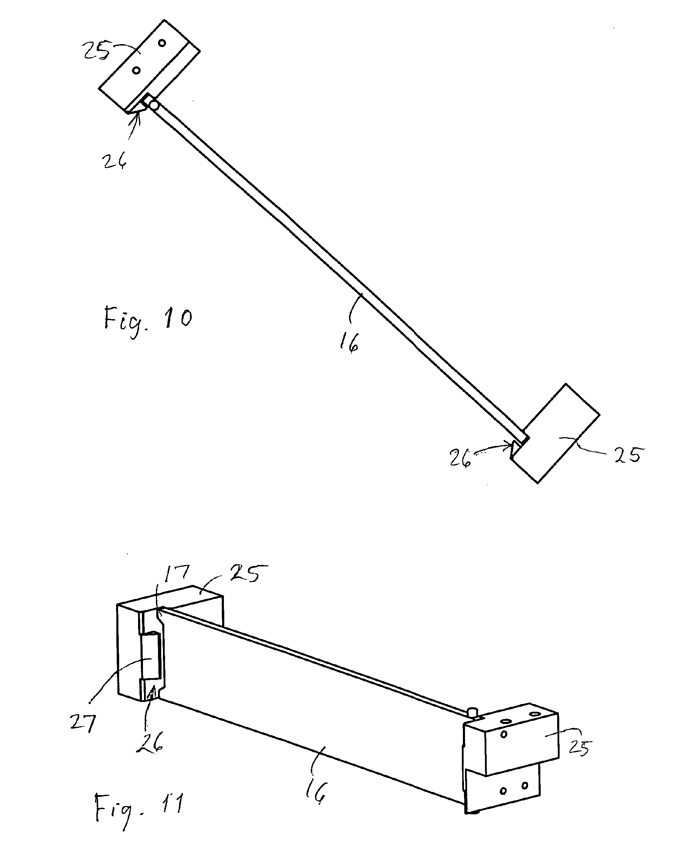

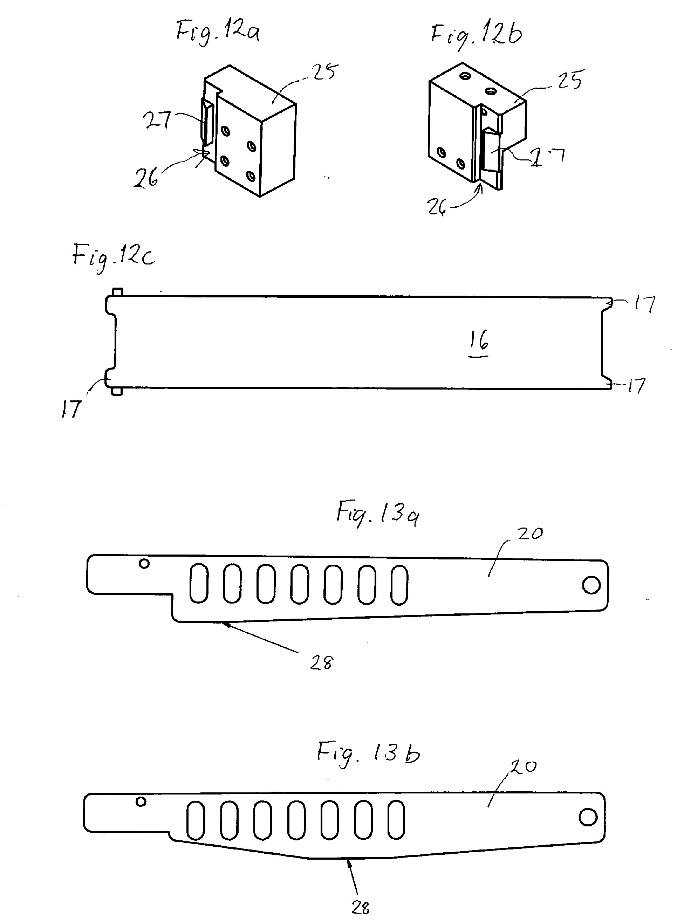

Under the separating tool 20, and above and at each side of the roller track 7, two stop members 25 are provided, as shown by the details on Figs. 10 - 12b. The stop members 25 are on their sides facing the roller track designed as mirror images of each other, while remaining differing details on the stop members 25 are mainly due to adaptation to the rest of the structure. In that connection it is to be mentioned that the separating plates 16 here have a special embodiment in relation to the prior art separating plates for plate freezers, as the plates 16 are designed with two tabs 17 at each end, shown on Fig. 12c. The separating plates 16 are placed in a usual way in the freezing chamber in the plate freezer 2 during freezing of products, thus dividing each block 1 into two half parts 1a, 1b. When a block 1 is frozen, most of the edges of the separating plates 16 are in level with the sides of the block 1, while the tabs 17 protrude from the top side and the bottom side, respectively, of the block in the standing position, see Fig. 4a. In the lying position of the block, the tabs 17 will protrude laterally in relation to the block 1; that situation is shown more clearly on Figs. 7 and 8.

The stop members 25 are each provided with a internal comer 26 that forms a stop for the tabs 17, and thereby the separating plate 16 cannot pass the stop members 25. In order to centre separating plates 16 as well as frozen blocks 1, the stop members 25 are provided with projections 27 which are chamfered in the direction from which the frozen block 1 is coming, as the projections 27 are dimensioned so that they can pass between the tabs 17. For better illustrating the relation around the engagement between tabs 17 and stop members 25, see Figs. 7 and 8 and the enlarged detail on Fig. 9a.

One of the stop members 25, possibly both stop members 25, are provided with a not shown sensor, which is known per se, and which can detect the presence of a separating plate 16. Since it is preferred to use a metal separating plate 16, an induction sensor is preferred. Mechanical or optical sensors are possible alternatives. The sensor is connected with a not shown control that also controls the movement of the separating tool 20. The control can possibly also be connected with the motor or motors driving the roller track 7.

According to the second embodiment of the method according to the invention, a lying frozen block 1 containing a separating plate 16 is conveyed against the stop members 25 until the tabs 17 reach the stops 26. Then the sensor detects the presence of the separating plate, and the separating tool 20 is moved down on the top side of the block 1 and thereby against the upper edge of the separating plate 16. When the tool 20 strikes the separating plate 16, the latter is pressed free, only requiring a movement of a few millimeters in relation to the block 1, so that the plate 16 is released and falls down through an opening in the roller track 7. The plates 16 are collected in not shown magazine under the roller track 7. By this operation, separation of the two block halves 1a, 1b will be effected if they are frozen together at each their side of the plate 16. If the block 1 already has been divided into two parts, e.g. caused by the impact at the overturning of the block 1 previously in the process, and if the separating plate 16 is only adhering to one of the half parts 1a, 1b, then function of the separating tool will be exactly the same, and the separating operation will thus only consist in the separating plate 16 being removed from the block half 1a, 1b in question to which it is has been frozen. Then the half parts 1a, 1b can continue along the roller track for stacking or further transport.

As shown on Figs. 13a and 13b, the separating tool 20 may have different geometrical shapes. Even if the tool 20 is tapering to the right on the Figure in both cases, a specially adapted section 28 is provided at the lower edge which is adapted for striking the separating plate 16. The section 28 may, as shown on Fig. 13a, be provided to the left, or, as shown on Fig. 13b, at the middle of the tool 20. In both cases, the section 28 which is to contact the plate 16 is sufficiently wide so as to avoid the tool 20 slipping around the upper edge of the plate 16.

In an alternative embodiment of the apparatus according to the invention, replacing drive rollers 12, along one side of the roller track 7 there may be an elongated tipping plate 18 which can be pivoted about an axis at the side of the roller track 7 in dependence of a cylinder 19. The plate 18 may thus, in a way similar to the rollers 12, move frozen blocks 1 lying on the side, over onto the roller track 7.

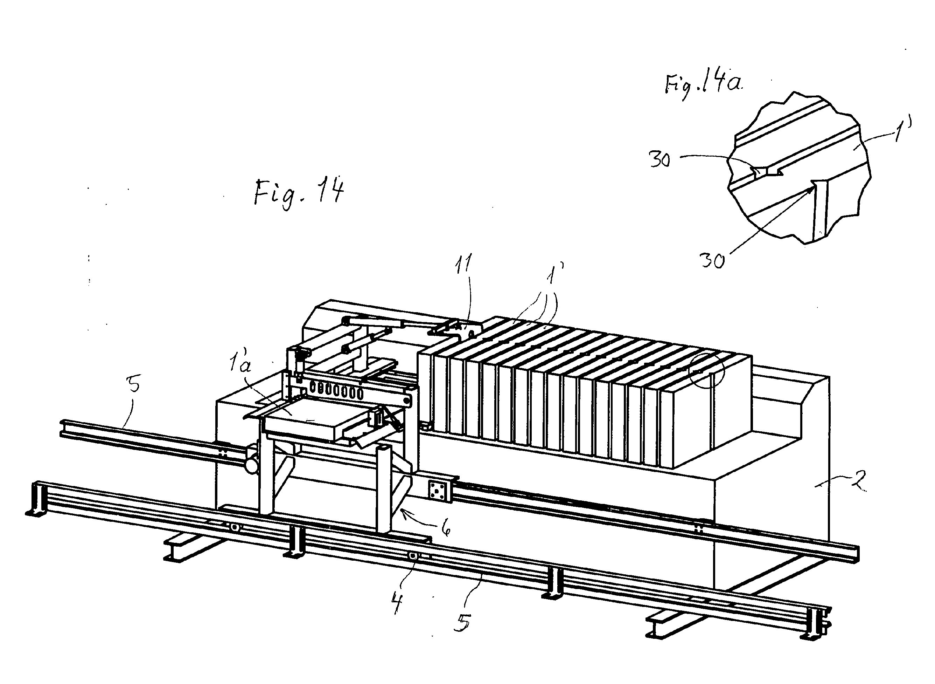

In a third embodiment of the apparatus according to the invention, there is intended a cutting of the frozen blocks. For this purpose, the frozen blocks 1' are provided with a notch 30 that extends at each side of each block 1', see Figs. 14 and 14a. The notch 30 is provided by means of a V-shaped fillet which is welded to the inner sides of each freezing chamber in the plate freezer 2, which is of the type known per se, only adapted to the fillet at the bottom of each freezing chamber. In such cases, the apparatus is largely designed as in the second embodiment above, but the sensor device is of optical or mechanical kind so that the position of the notch 30 is detected. It may thus be decided to detect the position of the notch 30 directly or to do it indirectly by detecting the leading or trailing end of the block 1'. The built-in control unit in the apparatus will then stop the movement of the block when the notch 30 is disposed right under the separating tool 20, which in this case is formed as a knife with a sharp edge along its lower edge. However, compared with the tool of the second embodiment, the stroke of the knife 20 will be significantly greater in order to ensure a complete cutting through, so that the block 1' is divided into two halves. The separating tool as knife can have different geometrical shapes; apart from those on Figs. 13 and 13b, the knife edge can be curved.

## Claims

1. Method for emptying a plate freezer (2) with vertical freezing plates, between which plates frozen blocks (1) can be formed and then displaced upwards into a standing position so that the blocks (1) are projecting up above the upper side of the plate freezer, where the frozen blocks (1) are conveyed to one side of the plate freezer by an apparatus extending across the top side of the plate freezer and which may be displaced along of the plate freezer, **characterised in that** at least one frozen block (1) is tilted in direction in parallel with the direction of displacement of the apparatus, from a standing to a lying and substantially horizontal position, where the frozen block eventually rests upon a substantially horizontally configured transport device (7) on the apparatus, and that the transport device (7) conveys the frozen block (1) to one side of the plate freezer.

2. Method according to claim 1, wherein the frozen block (1) is tilted by a mechanical arm (8, 11) on the apparatus by acting on the upper edge of the frozen block, and wherein the frozen block (1) is subsequently drawn over onto the transport device (7) by the mechanical arm (8, 11) gripping the distal edge of the frozen block in relation to the transport device (7).

3. Method according to claim 1 or 2, wherein tilting of the frozen block (1) occurs across at least one drive roller (12) which is oriented in parallel with the side of the transport device, and wherein the at least one drive roller (12) after tilting the block (1) and before drawing the block over onto the transport device (7) rotates and thereby moves the frozen block (1) at least some distance in direction towards the transport device.

4. Method according to claim 1 or 2, wherein tilting of the frozen block (1) occurs across at least one tipping plate (18) disposed at the side of the transport device, and wherein the tipping plate (18) after tilting the frozen block is pivoted about an axis oriented in parallel with the transport device (7), whereby the frozen block (1) is moved at least some distance in direction towards the transport device.

5. Method according to any preceding claim, wherein each frozen block (1) during conveying in the lying position on the transport device (7) is subjected to a dividing or separating operation, as the position of the frozen block is detected and then a separating tool (20) is moved down onto the upwards facing side of the frozen block until separation has been effected.

6. Method according to claim 5, wherein each frozen block (1) at the freezing is divided into at least two parts by means of a separating plate (16) that is frozen between the parts or at an end face of one part, **characterised in that** the frozen block (1) during transport in the lying position is stopped in its movement when the block (1) reaches a given position detected by a sensor which is capable of detecting the separating plate (16), after which the separating operation is performed by the separating tool (20) moving downwards and pressing against or striking an upwards facing side edge of the separating plate (16) until the separating plate is released from the frozen block (1).

7. Method according to claim 5, wherein each frozen block (1) is provided with a notch (30) along at least one side, where the notch (30) extends transversely to the direction of conveying the lying block, and that the frozen block (1) during conveying in the lying position is stopped in its movement when the block (1) reaches a given position detected by a sensor which is capable of detecting the position of the notch (30) directly or indirectly, after which the separating operation is performed by the separating tool (20) being moved down into the block (1) at or opposite the notch (30) on the block until the frozen block (1) is divided.

8. Apparatus for performing the method according to claim 1 and adapted for emptying a plate freezer (2) with vertical freezing plates between which vertically standing frozen blocks (1) can be formed, the plate freezer (2) being of the kind arranged for releasing the blocks by elevating either one block, a row of blocks or all blocks (1) in the plate freezer so that the blocks project up over the upper side of the plate freezer, where the apparatus may be suspended at the frame of the plate freezer so as to be displaced in the longitudinal direction of the plate freezer, where the apparatus is adapted to extend across the upper side of the plate freezer, and where the apparatus can convey elevated blocks (1) individually or in rows to one side of the plate freezer, **characterised in that** the apparatus is provided with a mainly horizontal transport device (7) carried by the apparatus and adapted for conveying frozen blocks (1) that are tilted and lying on the side on the transport device (7) towards the side of the plate freezer.

9. Apparatus according to claim 8, wherein the apparatus has at least one mechanical arm (8) which can be moved in the direction of the displacement of the apparatus and which is provided with a gripping member (11) at one end of the arm, where the arm (8) is arranged to perform one or more pulling movements with the gripping member (11) towards the transport device in dependence of an automatic control.

10. Apparatus according to claim 8 or 9, wherein at least one drive roller (12) is disposed at and oriented with its axis of rotation in parallel with a side edge of the transport device facing in the direction of displacement of the apparatus during operation, and wherein the drive roller (12) may rotate so that the upper side of the drive roller produces a movement against the transport device (7).

11. Apparatus according to claim 8 or 9, wherein along one side of the transport device (7) there is provided an elongated plate (18) which can be pivoted about an axis parallel with the side of the transport device (7) by a cylinder (19).

12. Apparatus according to any of claims 9 - 11, wherein the mechanical arm is a cylinder (8) with a first extendible end carrying the gripping element (11) and with a second end suspended so as to be pivoted up and down, where the up and down going pivoting movement can be controlled by a second cylinder (10) suspended in a frame (6) above the apparatus.

13. Apparatus according to any of claims 8 - 12, wherein the transport device (7) has an extended end (7') which is curving downwards at the side to which the blocks (1) are conveyed, where at least one guide (13) is provided above the downwards curving end (7'), where the curved end (7') and the guide (13) are arranged to transfer a frozen block (1) from horizontal position into vertical position, and where at the end of the transport device (7) there is provided shock-absorbing rollers (14) that may receive a frozen block (1) in its vertical position and guide the block onwards to a receiving means (15).

14. Apparatus according to any of claims 8 - 13, wherein the apparatus includes a sensor for detecting a position of a frozen block on the transport device (7), a separating tool (20) which is suspended movable substantially in vertical direction above the transport device (7), and a control which upon detecting the correct position of the frozen block can activate the separating tool (20) that is arranged to be moved down on the frozen block (1) for performing a separating operation on the frozen block.

15. Apparatus according to claim 14, wherein the sensor is arranged for detecting a separating plate (16) which is frozen between parts of the frozen block (1) or at an end face of a part of the block, and that the separating tool consists of a means (20) arranged for pressing or striking an upwards facing side edge of the separating plate (16) for releasing it from the frozen block (1).

16. Apparatus according to claim 14, wherein the separating tool consists of a knife arranged to be moved down into the upper side of the frozen block at or opposite to a notch (30) in the frozen block (1) in dependence of a control for dividing the frozen block.
